# EUROPEAN PATENT APPLICATION

(11) **EP 2 725 873 A1**
(43) Date of publication of application: **30.04.2014**
(21) Application number: 12802921.2
(22) Date of filing: 05.03.2012
(51) Int. Cl.: H04W 88/16

(54) **INFORMATION SENDING METHOD AND GATEWAY**

(30) Priority: 21.06.2011 CN 201110167899
(71) Applicant: ZTE Corporation, Shenzhen, Guangdong 518057 (CN)
(72) Inventor: DENG, Bing, Shenzhen Guangdong 518057 (CN); LI, Kui, Shenzhen Guangdong 518057 (CN); HUANG, Xiaobing, Shenzhen Guangdong 518057 (CN)
(74) Representative: Jansen, Cornelis Marinus
(86) International application number: PCT/CN2012/071943
(87) International publication number: WO 2012/174885

(57) **Abstract**

Embodiments of the disclosure disclose a method for sending information and a gateway. The method includes that: a gateway acquires user online information; the gateway monitors a Domain Name System (DNS) domain name inquiring message, forges a DNS server returning domain name parsing response, and sends the forged response to a core network element or a user terminal browser; the gateway receives a user HyperText Transfer Protocol (HTTP) request returned by the core network element or the user terminal browser; and the gateway inquires the user online information according to the user HTTP request, adds the user online information in the user HTTP request by taking the user online information as HTTP header information, and sends the user HTTP request including the HTTP header information to an internet content and service provider. With the technical solution of an embodiment of the disclosure, the problem that the internet content and service provider fails to acquire user online information of a mobile terminal user is solved.

## Description

### TECHNICAL FIELD

An embodiment of the disclosure relates to the field of a HyperText Transfer Protocol (HTTP) service application of a mobile user, and in particular to a method for sending information and a gateway.

### BACKGROUND

With the establishment of high speed 3G/4G networks, plus influence of multiple factors such as a trend of PC like mobile terminals and sensitivity and prompt response of a content and service provider to demands of a market, mobile communications are heading rapidly towards a mobile internet era. However, a problem keeping bugging the internet content and service provider is that when no proxy is set for a subscriber, some important user information of a mobile terminal such as a Mobile Subscriber International ISDN (MSISDN) number of the user cannot be acquired, leading to failure in locating the user by the internet content and service provider, such that no personalized content and service can be specifically provided to the subscriber. In addition, some fee businesses cannot be carried out also due to lack of the user information. With regard to this problem, quite a few methods have been proposed by researchers, none of which with much practicability or feasibility though, since all the methods proposed involves transformation of a mobile internet architecture, or transformation of content and traffic flows.

### SUMMARY

In view of this, embodiments of the disclosure provide a method for sending information and a gateway, solving the problem that an internet content and service provider fails to acquire user online information of a mobile terminal user.

To achieve the purpose above, a technical solution of an embodiment of the disclosure is implemented as follows.

An embodiment of the disclosure provides a method for sending information, which includes:
acquiring, by a gateway, user online information;
monitoring, by the gateway, a Domain Name System (DNS) domain name inquiring message on a mobile internet, forging a DNS server returning domain name parsing response, and sending the forged response to a core network element or a user terminal browser;
receiving, by the gateway, a user HyperText Transfer Protocol (HTTP) request returned by the core network element or the user terminal browser; and
inquiring, by the gateway, the user online information according to the user HTTP request, adding the user online information in the user HTTP request by taking the user online information as HTTP header information, and sending the user HTTP request including the HTTP header information to an internet content and service provider.

In the method above, the method may further include: before monitoring the DNS domain name inquiring message by the gateway,
acquiring, by the gateway, user log information.

In the method above, the acquiring the user online information by the gateway may include:
receiving, by an HTTP header information transparent gateway, a user online message from the core network element via a user online-offline message interface, acquiring the user online information from the user online message, and storing the user online information locally; wherein the user online information may include information on a user IP address, a user MSISDN number, a user online time, a user International Mobile Subscriber Identification Number (IMSI), and a user location.

In the method above, the acquiring the user log information by the gateway may include:
receiving, by an HTTP header information transparent gateway, a log message sent by an exit firewall from a private network to a public network via a log message interface, and acquiring the log information obtained after Network Address Translation (NAT) of a user IP address from the log message; wherein the log information may include: a user IP address, a user port number, a public network IP address of the user, a public network port number of the user, a session ID, and a session beginning time.

In the method above, the monitoring the DNS domain name inquiring message and forging the DNS server returning domain name parsing response by the gateway may include:
monitoring, by an HTTP header information transparent gateway, the DNS domain name inquiring message via an inquiring interface connecting the HTTP header information transparent gateway to a DNS, and acquiring a domain name accessed by the user from a monitored DNS parsing request; comparing, by the HTTP header information transparent gateway, the domain name accessed by the user with multiple pre-configured domain names; if the domain name accessed by the user matches one of the pre-configured domain names, forging, by the HTTP header information transparent gateway, the DNS server returning domain name parsing response, and setting an IP address parsed from the domain name in the parsing response as an IP address of the HTTP header information transparent gateway itself.

In the method above, the inquiring the user online information according to the user HTTP request by the gateway may include:
receiving, by an HTTP header information transparent gateway, the user HTTP request sent by the core network element or the user terminal browser via an HTTP message receiving interface, and searching the locally stored user online information for user online information corresponding to a user IP address and a request period in the user HTTP request.

In the method above, the inquiring the user online information according to the user HTTP request by the gateway may include:
when a user IP address is a public network IP address of the user and a public network port number of the user obtained after NAT, finding, by an HTTP header information transparent gateway, log information corresponding to the public network IP address of the user and the public network port number of the user in the locally stored log information according to the public network IP address of the user and the public network port number of the user, acquiring the user IP address in the log information, and searching for user online information corresponding to the user IP address and a request period.

In the method above, the sending the user HTTP request including the HTTP header information to the internet content and service provider may include:
obtaining, by an HTTP header information transparent gateway, an IP address of the domain name in the user request through inquiring a DNS, and sending the user HTTP request including the HTTP header information to the internet content and service provider according to the IP address.

An embodiment of the disclosure further provides a gateway, which includes: a user online-offline message interface module, an inquiring interface module, a message processing module, and a traffic processing module; wherein
the user online-offline message interface module is configured to acquire user online information;
the inquiring interface module is configured to monitor a Domain Name System (DNS) domain name inquiring message;
the message processing module is configured to forge a DNS server returning domain name parsing response, and to send the forged response to a core network element or a user terminal browser; and
the traffic processing module is configured to receive a user HyperText Transfer Protocol (HTTP) request returned by the core network element or the user terminal browser, to inquire the user online information according to the user HTTP request, to add the user online information in the user HTTP request by taking the user online information as HTTP header information, and to send the user HTTP request including the HTTP header information to an internet content and service provider.

In the gateway above, the gateway may further include:
a log message interface module configured to acquire user log information; and
a management module configured to store the acquired user online information and user log information.

With the method for sending information and the gateway provided by embodiments of the disclosure, a gateway acquires user online information; the gateway monitors a DNS domain name inquiring message, forges a DNS server returning domain name parsing response, and sends the forged response to a core network element or a user terminal browser; the gateway receives a user HyperText Transfer Protocol (HTTP) request returned by the core network element or the user terminal browser; and the gateway inquires the user online information according to the user HTTP request, adds the user online information in the user HTTP request by taking the user online information as HTTP header information, and sends the user HTTP request including the HTTP header information to an internet content and service provider, such that the internet content and service provider can obtain user online information of a mobile terminal user, thereby providing personalized content and service for the user better.

### BRIEF DESCRIPTION OF THE DRAWINGS

Fig. 1 is a flowchart of a method for sending information according to an embodiment of the disclosure;
Fig. 2 is a schematic diagram of a structure of a system for sending information according to an embodiment of the disclosure;
Fig. 3 is a flowchart of an HTTP traffic of a user after a gateway fails in an embodiment of the disclosure; and
Fig. 4 is a schematic diagram of a structure of an implementing gateway according to an embodiment of the disclosure.

### DETAILED DESCRIPTION

According to various embodiments of the disclosure, a gateway acquires user online information; the gateway monitors a Domain Name System (DNS) domain name inquiring message, forges a DNS server returning domain name parsing response, and sends the forged response to a core network element or a user terminal browser; the gateway receives a user HyperText Transfer Protocol (HTTP) request returned by the core network element or the user terminal browser; and the gateway inquires the user online information according to the user HTTP request, adds the user online information in the user HTTP request by taking the user online information as HTTP header information, and sends the user HTTP request including the HTTP header information to an internet content and service provider.

The disclosure will be further illustrated in detail with reference to the drawings and specific embodiments hereinafter.

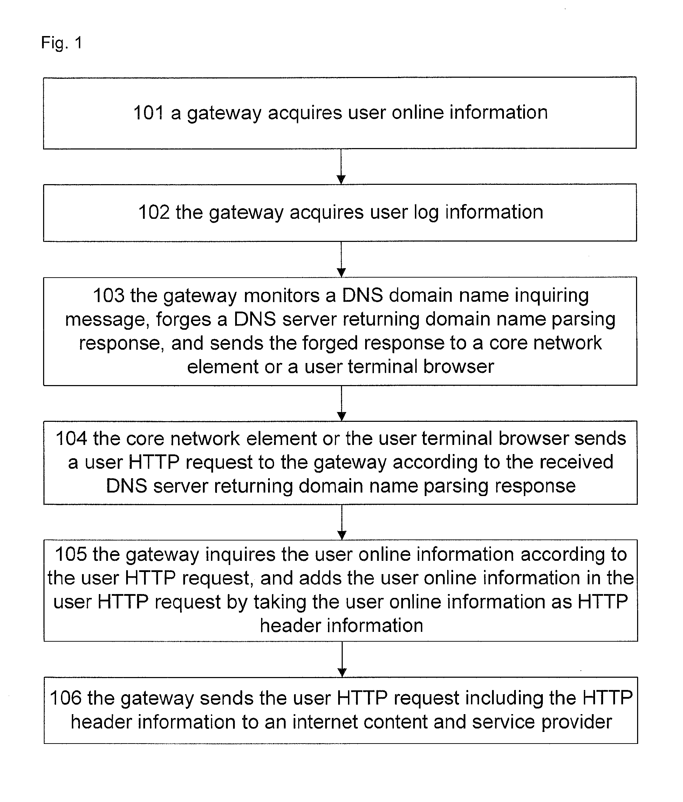

An embodiment of the disclosure provides a method for sending information, Fig. 1 is a flowchart of a method for sending information according to an embodiment of the disclosure. As shown in Fig. 1, the method includes the following steps.

Step 101: a gateway acquires user online information.

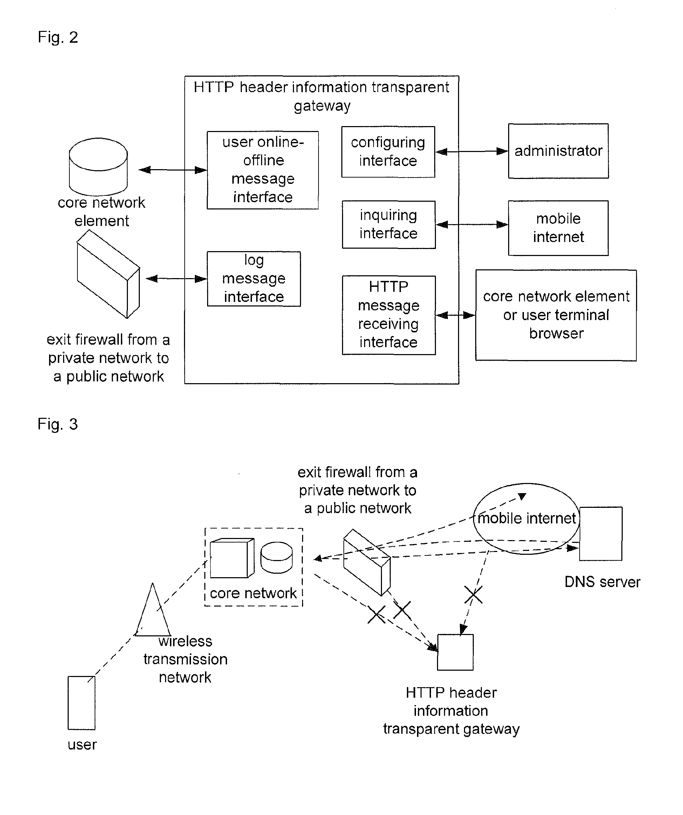

Specifically, an embodiment of the disclosure is illustrated taking an HTTP header information transparent gateway as an example. As shown in Fig. 2, the HTTP header information transparent gateway is connected to a core network element via a user online-offline message interface, and may receive a user online message sent by the core network element; the HTTP header information transparent gateway acquires the user online information from the user online message, and stores the user online information locally; wherein the user online information includes information such as a user IP address, a user MSISDN number, a user online time, a user International Mobile Subscriber Identification Number (IMSI), and a user location; the core network element includes a Gateway GPRS Support Node (GGSN), a Packet Data Serving Node (PDSN), an Authentication Authorization Accounting (AAA) server, and the like.

If receiving a user offline message sent by the core network element, then the HTTP header information transparent gateway deletes the locally stored user online information; in the embodiment, the user online message and the user offline message are born using a Remote Authentication Dial In User Service (RADIUS) protocol.

Step 102: the gateway acquires user log information.

Specifically, as shown in Fig. 2, the HTTP header information transparent gateway is connected to an exit firewall from a private network to a public network via a log message interface, receives a log message sent by the exit firewall from a private network to a public network via the log message interface, acquires log information, which is obtained after Network Address Translation (NAT) of a user IP address, from the log message, and stores the log information; the log information includes: a user IP address, a user port number, a user public network IP address, a user public network port number, a session ID, and a session beginning time, and the like; in the embodiment, the log message is born by a syslog message.

Step 103: the gateway monitors a DNS domain name inquiring message, forges a DNS server returning domain name parsing response, and sends the forged response to a core network element or a user terminal browser.

Specifically, multiple domain names of the content and service provider including additional HTTP header information are configured by a configuring interface on the HTTP header information transparent gateway; as shown in Fig. 2, the HTTP header information transparent gateway accesses a mobile internet by means of bypass, and monitors, by using port mirroring or beam splitting, an inquiring interface connecting the DNS of the mobile internet and the gateway itself. By monitoring the inquiring interface, the DNS domain name inquiring message can be monitored, and the HTTP header information transparent gateway acquires a domain name accessed by the user from the DNS parsing request.

The HTTP header information transparent gateway compares the domain name accessed by the user with multiple configured domain names; if the domain name accessed by the user is included in the multiple domain names, then there is a successful match; then the HTTP header information transparent gateway copies the DNS domain name inquiring message, and forges the DNS server returning domain name parsing response, in which an IP address parsed from the domain name is set as an IP address of the HTTP header information transparent gateway itself.

The HTTP header information transparent gateway may learn the IP address from which the DNS domain name inquiring message comes according to the DNS domain name inquiring message; as either the core network element or the user terminal browser may send the DNS domain name inquiring message; the HTTP header information transparent gateway sends the forged DNS server returning domain name parsing response to the source of the DNS domain name inquiring message, namely to the core network element or the user terminal browser; here, as the HTTP header information transparent gateway is closer to the core network element or the user terminal browser than a DNS server in terms of a location in the network, the HTTP header information transparent gateway may return the DNS server returning domain name parsing response earlier than the DNS server.

Step 104: the core network element or the user terminal browser sends a user HTTP request to the gateway according to the received DNS server returning domain name parsing response.

Specifically, after the core network element or the user terminal browser receives the DNS server returning domain name parsing response sent by the HTTP header information transparent gateway, as the IP address parsed from a domain name therein is the IP address of the HTTP header information transparent gateway, the core network element or the user terminal browser sends the user HTTP request to the HTTP header information transparent gateway according to the IP address of the HTTP header information transparent gateway.

Step 105: the gateway inquires the user online information according to the user HTTP request, and adds the user online information in the user HTTP request by taking the user online information as HTTP header information.

Specifically, the HTTP header information transparent gateway receives the user HTTP request sent by the core network element or the user terminal browser via an HTTP message receiving interface, and searches the locally stored user online information for user online information corresponding to a user IP address and a request period in the user HTTP request, so as to obtain information such as a user IP address, a user MSISDN number, a user online time, a user International Mobile Subscriber Identification Number (IMSI), and a user location, and the like.

Alternatively, when a user IP address is a public network IP address of the user and a public network port number of the user obtained after NAT, the HTTP header information transparent gateway finds log information corresponding to the public network IP address of the user and the public network port number of the user in the locally stored log information according to the public network IP address of the user and the public network port number of the user, acquires the user IP address in the log information, and searches for user online information corresponding to the user IP address and the request period, so as to obtain information such as a user IP address, a user MSISDN number, a user online time, a user International Mobile Subscriber Identification Number (IMSI), and a user location, and the like.

The HTTP header information transparent gateway adds the inquired user online information in the user HTTP request by taking the user online information as HTTP header information.

Step 106: the gateway sends the user HTTP request including the HTTP header information to an internet content and service provider.

Specifically, the HTTP header information transparent gateway obtains an IP address of the domain name in the user request through inquiring the DNS, and sends the user HTTP request including the HTTP header information to the internet content and service provider according to the IP address.

Here, as the user IP address and the user port number are included in the user online information sent from the HTTP header information transparent gateway to the internet content and service provider, the internet content and service provider may returns a response to the user without using the HTTP header information transparent gateway.

Fig. 3 is a flowchart of an HTTP traffic of a user after a gateway fails in an embodiment of the disclosure. As shown in Fig. 3, after a failure occurs to the HTTP header information transparent gateway, the user online-offline message interface between the HTTP header information transparent gateway and the core network is disconnected; the NAT log message interface from the user private network to the public network between the HTTP header information transparent gateway and the exit firewall from the private network to the public network is disconnected; a port link by which the HTTP header information transparent gateway monitors the DNS domain name inquiring message is disconnected; the user initiates a user HTTP request, which is sent to the core network via a wireless transmission network; the core network initiates a DNS domain name parsing request to the DNS server so as to parse the domain name in the user HTTP request initiated by the user, the DNS server returns a DNS domain name parsing response, a domain name address in which is the IP address corresponding to the domain name in the user HTTP request. After receiving the DNS domain name parsing response, the core network forwards the user HTTP request to the internet content and service provider. It can be seen that when the DNS domain name parsing response is returned by the DNS server, the user HTTP request is directly sent to a host server directed by the domain name, the user may access the mobile internet normally. Therefore, an HTTP traffic of a user is not affected after the HTTP header information transparent gateway fails.

In an embodiment of the disclosure, as the HTTP header information transparent gateway monitors, by port mirroring or beam splitting, the inquiring interface connecting the HTTP header information transparent gateway to the DNS, no change needs to be made to an existing networking architecture of the mobile internet; as the HTTP header information transparent gateway accesses the mobile internet by means of bypass, a failure in the HTTP header information transparent gateway will not affect the use of the mobile internet; as the HTTP header information transparent gateway accesses the mobile internet by means of transparent proxy, user online information that cannot be included in the user HTTP request can be included in the internet content and service provider without any transformation of the mobile terminal user or the internet content and service provider; in addition to the ability of processing HTTP header information, it is also possible to perform traffic control on a user HTTP request configured with no proxy. For example, the HTTP header information transparent gateway is configured with a domain name black/white list, and monitors a DNS port; for a domain name falling in the black list, the HTTP header information transparent gateway forges the DNS server returning domain name parsing response, directing the address parsed from the domain name to the HTTP header information transparent gateway; and the user HTTP request is forwarded to the HTTP header information transparent gateway, which returns an access prohibited response to the user, thereby achieving control over the domain name black list.

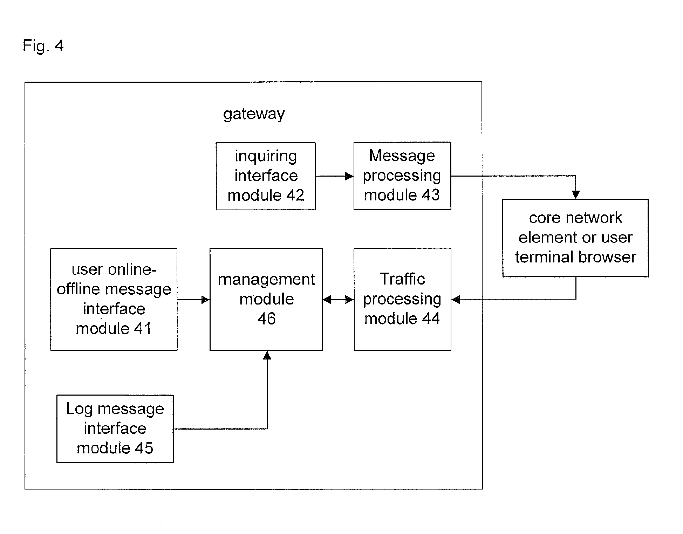

To implement the aforementioned method, an embodiment of the disclosure further provide a gateway, Fig. 4 is a schematic diagram of a structure of an implementing gateway according to an embodiment of the disclosure. As shown in Fig. 4, the gateway includes a user online-offline message interface module 41, an inquiring interface module 42, a message processing module 43, and a traffic processing module 44, wherein
the user online-offline message interface module 41 is configured to acquire user online information;
the inquiring interface module 42 is configured to monitor a Domain Name System (DNS) domain name inquiring message;
the message processing module 43 is configured to forge a DNS server returning domain name parsing response, and to send the forged response to a core network element or a user terminal browser; and
the traffic processing module 44 is configured to receive a user HyperText Transfer Protocol (HTTP) request returned by the core network element or the user terminal browser, to inquire the user online information according to the user HTTP request, to add the user online information in the user HTTP request by taking the user online information as HTTP header information, and to send the user HTTP request including the HTTP header information to an internet content and service provider.

The gateway further includes:
a log message interface module 45 configured to acquire user log information; and
a management module 46 configured to store the acquired user online information and user log information.

The user online-offline message interface module 41 acquiring the user online information may include: a user online message is received from the core network element via a user online-offline message interface; the user online information is acquired from the user online message and is stored locally, wherein the user online information includes information such as a user IP address, a user MSISDN number, a user online time, a user International Mobile Subscriber Identification Number (IMSI), and a user location.

The log message interface module 45 acquiring the user log information may include: a log message sent by an exit firewall from a private network to a public network is received, and log information obtained after Network Address Translation (NAT) of a user IP address is acquired from the log message, wherein the log information includes: a user IP address, a user port number, a user public network IP address, a user public network port number, a session ID, and a session beginning time.

The inquiring interface module 42 monitoring the DNS domain name inquiring message and the message processing module 43 forging a DNS server returning domain name parsing response may include: the DNS domain name inquiring message is monitored; a domain name accessed by the user is acquired from an monitored DNS parsing request; the domain name accessed by the user is compared with multiple pre-configured domain names; if the domain name accessed by the user matches one of the pre-configured domain names, the DNS server returning domain name parsing response is forged, and an IP address parsed from the domain name in the domain name parsing response is set as an IP address of the HTTP header information transparent gateway itself.

The traffic processing module 44 inquiring the user online information according to the user HTTP request may include:
the user HTTP request sent by the core network element or the user terminal browser is received, and the user online information stored in the management module is searched for user online information corresponding to a user IP address and a request period in the user HTTP request.

The traffic processing module 44 inquiring the user online information according to the user HTTP request may include:
When a user IP address is a public network IP address of the user and a public network port number of the user obtained after NAT, log information corresponding to the public network IP address of the user and the public network port number of the user is found in the log information stored in the management module according to the public network IP address of the user and the public network port number of the user, the user IP address is acquired in the log information, and user online information corresponding to the user IP address and the request period is found.

The traffic processing module 44 sending the user HTTP request including the HTTP header information to an internet content and service provider may include: an IP address of the domain name in the user request is obtained through inquiring the DNS, and the user HTTP request including the HTTP header information is sent to the internet content and service provider according to the IP address.

What described are merely preferred embodiments of the disclosure, and are not intended to limit the scope of the disclosure. Any modification, equivalent replacement, improvement, and the like made within the spirit and principle of the disclosure should be included in the scope of the disclosure.

## Claims

1. A method for sending information, comprising:
acquiring, by a gateway, user online information;
monitoring, by the gateway, a Domain Name System (DNS) domain name inquiring message on a mobile internet, forging a DNS server returning domain name parsing response, and sending the forged response to a core network element or a user terminal browser;
receiving, by the gateway, a user HyperText Transfer Protocol (HTTP) request returned by the core network element or the user terminal browser; and
inquiring, by the gateway, the user online information according to the user HTTP request, adding the user online information in the user HTTP request by taking the user online information as HTTP header information, and sending the user HTTP request including the HTTP header information to an internet content and service provider.

2. The method according to claim 1, further comprising: before monitoring the DNS domain name inquiring message by the gateway,
acquiring, by the gateway, user log information.

3. The method according to claim 1, wherein the acquiring the user online information by the gateway comprises:
receiving, by an HTTP header information transparent gateway, a user online message from the core network element via a user online-offline message interface, acquiring the user online information from the user online message, and storing the user online information locally; wherein the user online information comprises information on a user IP address, a user Mobile Subscriber International ISDN (MSISDN) number, a user online time, a user International Mobile Subscriber Identification Number (IMSI), and a user location.

4. The method according to claim 2, wherein the acquiring the user log information by the gateway comprises:
receiving, by an HTTP header information transparent gateway, a log message sent by an exit firewall from a private network to a public network via a log message interface, and acquiring the log information obtained after Network Address Translation (NAT) of a user IP address from the log message; wherein the log information comprises: a user IP address, a user port number, a public network IP address of the user, a public network port number of the user, a session ID, and a session beginning time.

5. The method according to claim 1, wherein the monitoring the DNS domain name inquiring message and forging the DNS server returning domain name parsing response by the gateway comprises:
monitoring, by an HTTP header information transparent gateway, the DNS domain name inquiring message via an inquiring interface connecting the HTTP header information transparent gateway to a DNS, and acquiring a domain name accessed by the user from a monitored DNS parsing request; comparing, by the HTTP header information transparent gateway, the domain name accessed by the user with multiple pre-configured domain names; if the domain name accessed by the user matches one of the pre-configured domain names, forging, by the HTTP header information transparent gateway, the DNS server returning domain name parsing response, and setting an IP address parsed from the domain name in the parsing response as an IP address of the HTTP header information transparent gateway itself.

6. The method according to claim 1, wherein the inquiring the user online information according to the user HTTP request by the gateway comprises:
receiving, by an HTTP header information transparent gateway, the user HTTP request sent by the core network element or the user terminal browser via an HTTP message receiving interface, and searching the locally stored user online information for user online information corresponding to a user IP address and a request period in the user HTTP request.

7. The method according to claim 2, wherein the inquiring the user online information according to the user HTTP request by the gateway comprises:
when a user IP address is a public network IP address of the user and a public network port number of the user obtained after NAT, finding, by an HTTP header information transparent gateway, log information corresponding to the public network IP address of the user and the public network port number of the user in the locally stored log information according to the public network IP address of the user and the public network port number of the user, acquiring the user IP address in the log information, and searching for user online information corresponding to the user IP address and a request period.

8. The method according to claim 1, wherein the sending the user HTTP request including the HTTP header information to the internet content and service provider comprises:
obtaining, by an HTTP header information transparent gateway, an IP address of the domain name in the user request through inquiring a DNS, and sending the user HTTP request including the HTTP header information to the internet content and service provider according to the IP address.

9. A gateway, comprising: a user online-offline message interface module, an inquiring interface module, a message processing module, and a traffic processing module; wherein
the user online-offline message interface module is configured to acquire user online information;
the inquiring interface module is configured to monitor a Domain Name System (DNS) domain name inquiring message;
the message processing module is configured to forge a DNS server returning domain name parsing response, and to send the forged response to a core network element or a user terminal browser; and
the traffic processing module is configured to receive a user HyperText Transfer Protocol (HTTP) request returned by the core network element or the user terminal browser, to inquire the user online information according to the user HTTP request, to add the user online information in the user HTTP request by taking the user online information as HTTP header information, and to send the user HTTP request including the HTTP header information to an internet content and service provider.

10. The gateway according to claim 9, further comprising:
a log message interface module configured to acquire user log information; and
a management module configured to store the acquired user online information and user log information.
